# EUROPEAN PATENT APPLICATION

(11) **EP 1 569 491 A2**
(43) Date of publication of application: **31.08.2005**
(21) Application number: 05003791.0
(22) Date of filing: 22.02.2005
(51) Int. Cl.: H04Q 7/38, H04L 12/56

(54) **Group network system using bluetooth and generating method thereof**

(30) Priority: 24.02.2004 KR 2004012385; 24.02.2004 KR 2004012386; 24.02.2004 KR 2004012387
(71) Applicant: LG ELECTRONICS INC., Seoul (KR)
(72) Inventor: Shin, Kang Soo, Mapo-Gu Seoul (KR); Son, Jin-Ho, Gwacheon Gyeonggi-Do (KR); Heo, Jin, Songpa-Gu Seoul (KR); Kim, Min-Jung, Seoul (KR)
(74) Representative: Rupprecht, Kay

(57) **Abstract**

A group network system using bluetooth and a generating method thereof, comprising: a connection manager for maintaining and managing multiple-connection between a server device and client devices and forwarding a message to the corresponding device through server channel allocation; a data manager for forwarding the message to a module or an application which has an interest in the received message or forwarding a message generated by the application to the connection manager; and a service manager for maintaining, managing and releasing a list of applications, so that reliable data communications is enabled because a plurality of devices generate one network and a server transfer can be automatically performed even when a disconnection of the server which generates the network occurs.

## Description

### BACKGROUND OF THE INVENTION

### 1. Field of the Invention

The present invention relates to a group network generation system using a wireless communication, and more particularly, to a group network generation system and an implementation method thereof using bluetooth which enable multilateral reliable data communications by forming network segments with bluetooth devices having less resource.

### 2. Description of the Background Art

With the appearance of a variety of information communication devices such as PCs, cellular phones, PDAs and the like, the need for data communications between the devices arises. Such wireless data communications typically includes IrDA (Infrared Data Association) communication, LAN communication adopting the IEEE 802.11 standard and communication using Bluetooth.

Firstly, the Infrared Data Association (IrDA) communication is a technique for communication using infrared light, in which the first version of the IrDA specification, v1.0, is SIR(Serial Infra Red) and v1.1 is FIR(Fast Infra RED). IrDA can only be transmitted within a range of 1 meters and has the directivity which permits the transmission and reception of data only in a specific direction. The SIR supports a data rate of up to 115.2 Kbps, and the FIR supports a data rate of 4 to 16 Mbps. According to such features, it is very easy and simple to use the IrDA communication method because data communications can be performed simply by making infrared ports between two devices face each other.

In addition, the wireless LANs using the IEEE 802.11 standard supports a MAC protocol and employs a spread spectrum method which allows the transmission without interference by spreading data to be transmitted by a wide frequency bandwidth. There are two kinds of the spread spectrum methods: a DSS (Direct Sequence Spread Spectrum) method and a FHSS (Frequency Hopping Spread Spectrum), which are implemented in the 2.4GHz band.

Meanwhile, a bluetooth method is a standard developed for a local area network constituting a private network, and operates at a data transmission rate of 1 Mbps with a range from 10 up to 100 meters (in case of high power) by using nondirectional radio frequencies. Such a Bluetooth method allows a plurality of devices to be connected to each other and be used.

Communication methods using the related IrDA and IEEE 802.x permit the wireless reception and transmission of data, advantageously. But, in case of the IrDA communication method, it is impossible to implement a network including a plurality of devices, and in case of the IEEE 802.x communication method, it is impossible to mount the IEE 802.X communication system on small devices.

Moreover, the Bluetooth method can implement an IP network by defining Dial-Up Networking, PAN (Personal Area Networks) and LAP for data transmission between two devices, but it requires a separate TCP/IP stack. In addition, when a plurality of devices generate an IP network, since a device functioning as a master should serve as an IP router, a bandwidth of the overall network is reduced.

### SUMMARY OF THE INVENTION

Therefore, an object of the present invention is to provide a group network system using bluetooth and a generating method thereof which can keep the group network stable or manage the group network efficiently, and increase user convenience and improve the network performance by performing multiple-connection between the devices by server channel allocation using bluetooth serial port profiles.

To achieve these and other advantages and in accordance with the purpose of the present invention, as embodied and broadly described herein, there is provided a group network system using bluetooth, comprising: a connection manager for maintaining and managing multiple-connection between a server device and client devices and forwarding message to the corresponding device through server channel allocation; a data manager for forwarding the message to a module or an application which has an interest in the received message or forwarding a message generated by the application to the connection manager; and a service manager for maintaining, managing and releasing a list of applications.

To achieve these and other advantages and in accordance with the purpose of the present invention, as embodied and broadly described herein, there is provided a method for generating a group network using bluetooth, comprising: opening a bluetooth RFCOMM server channel of the server device and waiting for a connection request from the client device; establishing a connection to the server device and storing information on the connected corresponding client device at the connection request from the client device; waiting for a message received from the client device; and checking a target address and forwarding the message to the corresponding client device if the message is received.

To achieve these and other advantages and in accordance with the purpose of the present invention, as embodied and broadly described herein, there is provided a method for generating a group network using bluetooth, comprising: a step in which at least one bluetooth serial port (or bluetooth serial profile) is opened from the server device and it is checked whether there is a request for server channel allocation from the client device; a step in which the server channel registered in the database of the server device is allocated to the client device when the request for sever channel allocation is checked; a step in which it is checked whether the client device connects to the allocated server channel; a step in which the server device records information indicating that the connected corresponding server channel is in use if the client device connects to the allocated server channel; and a step in which the server device deletes the information indicating a disconnected corresponding server channel is in use if the client device connecting to the server channel disconnects from the server device.

To achieve these and other advantages and in accordance with the purpose of the present invention, as embodied and broadly described herein, there is provided a method for generating a group network comprising: a step in which it is determined whether or not there is a server disconnection request; a step in which the server device selects a new server device from the plurality of client devices; a step in which the server device having received the disconnection request requests a server transfer from the new server device and notifies the client devices of the new sever device; and a step in which the client devices reconnect with the new server device.

To achieve these and other advantages and in accordance with the purpose of the present invention, as embodied and broadly described herein, there is provided a method for generating a group network comprising: a step in which the client device detects a disconnection of the server device; a step in which a default server device is checked among the client devices if the disconnection is detected; and a step in which all the client devices except for the client device which is checked as the default server device are reconnected to the default server device.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic view of a group network system using Bluetooth in accordance with the present invention;
Figure 2 is a construction view of a server device in accordance with the present invention;
Figure 3 is an exemplary view showing a schematic construction in which wireless data communication is performed with multiple-connection between a server device and client devices in accordance with the present invention;
Figure 4 is a flowchart illustrating a method for generating a group network for forwarding messages between members in accordance with the embodiment of the present invention;
Figure 5 is a flowchart illustrating a method for acquiring application information and acquiring a server channel from the client device;
Figure 6 is a flowchart illustrating an operation of the server device when the server device receives an information request and a server channel allocation request from the client device in accordance with the embodiment of the present invention;
Figure 7 is an exemplary view showing an operation of the client device according to server channel allocation in the present invention;
Figure 8 is a flowchart illustrating a method for managing a server channel in accordance with the embodiment of the present invention;
Figure 9A and 9B are an exemplary view illustrating an automatic server transfer in a group network system in accordance with the present invention.
Figure 10 is a flowchart illustrating a method for server connection in accordance with the embodiment of the present invention;
Figure 11 is a flowchart illustrating a method for client connection in accordance with the embodiment of the present invention; and
Figure 12 is a flowchart illustrating an automatic server transfer in accordance with the embodiment of the present invention.

The foregoing and other objects, features, aspects and advantages of the present invention will become more apparent from the following detailed description of the present invention when taken in conjunction with the accompanying drawings.

### DETAILED DESCRIPTION OF THE PREFERRED EMBODIMENTS

Reference will now be made in detail to the preferred embodiments of the present invention, examples of which are illustrated in the accompanying drawings.

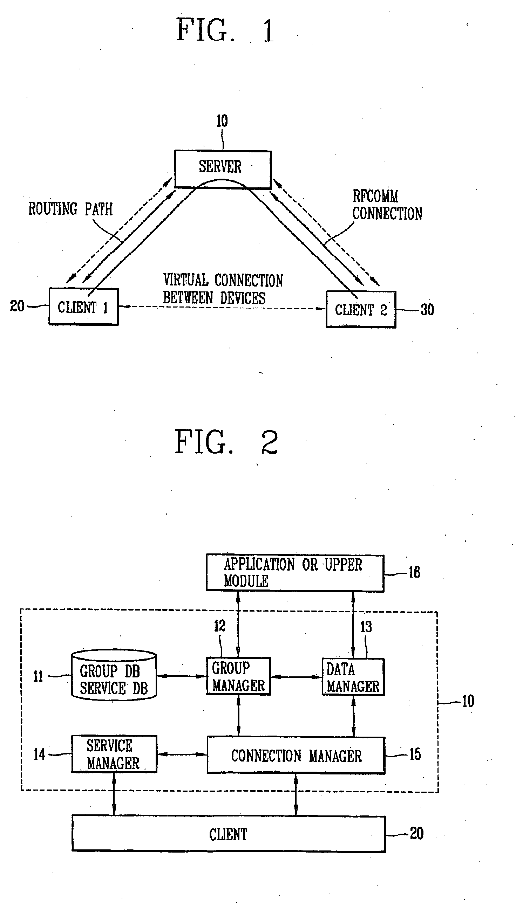

Figure 1 is a schematic view of a group network system using Bluetooth in accordance with the present invention.

As shown in Figure 1, a group network system using Bluetooth relays data communications with client devices 20 and 30 as one server device 10 functions as a gateway to thereby form a routing path. At this time, the server device 10 and the client devices 20 and 30 can obtain each other's information by opening well-known ports or previously arranged ports. In addition, the server device and the client devices are Bluetooth devices which can perform multiple-connection by using bluetooth serial port profiles (or bluetooth serial ports) which are defined in the Bluetooth standard version 1.1.

To be more in detail, the group network system in accordance with the present invention generates a virtual connection path between the server device 10 and the client devices 20 and 30, respectively, and a virtual connection path between the client 20 and the client 30. In addition, the group network system generates a routing path between the client devices 20 and 30 through the server device 10. At this time, the server device 10 and the client devices 20 and 30 have 48-bit Bluetooth addresses, respectively, which function as IDs in the group network. In addition, the one server device 10 and a plurality of client devices generate connection paths between devices by allocating server channels by using the RFCOMM protocols. Here, the RFCOMM protocol is a cable replacement protocol, which is an interface enabling smooth connection with a serial communication emulator such as RS-232C for connecting a modem.

For example, when one client 20 wants to send a message to the other client 30, the client device 20 sends a message including a Bluetooth address of the other client device 30 to the server device 10 and the server device 10 sends the message to the corresponding device 30, whereby the message can be sent and received between the client devices 20 and 30 through data communications.

Figure 2 is a construction view of a server device in accordance with the present invention.

As shown in Figure 2, the server device 10 in accordance with the present invention includes: a connection manager 15 for maintaining and managing connections with client devices and forwarding message to the corresponding device 20 by Bluetooth RFCOMM connection; a data manager 13 for transmitting data to a module or an application 16 which has an interest in the message received from the connection manager 15 or forwarding a message generated by the application or the module 16 to the connection manager 15; a group manager 12 for maintaining and managing information on the network and every member constituting the network, and performing updates by providing the information to every member when a new event occurs; a service manager 14 performing the query and response to the corresponding client devices or maintaining, managing and releasing a list of applications offered by the client devices when client devices want to participate in a new network or the server device 10 intends to make client devices which do not take part in the network participate in the network; and a database (group DB or service DB) 11 for storing information on the server device 10 itself on the network and information on the client devices. Here, a construction of the server device and a construction of the client devices are the same to each other, basically. The existing client devices can be registered as a new server device by a server transfer.

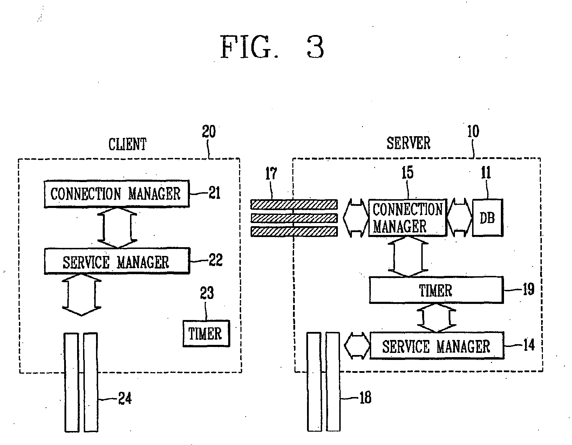

Figure 3 is an exemplary view showing a schematic construction in which wireless data communication is performed with multiple-connection between a server device and client devices in accordance with the present invention.

As shown in Figure 3, the server device 10 and the client device 20 are constructed to exchange necessary information through well-known ports 18 and 24 in order that the server device 10 and the client device 20 can exchange necessary information by being connected to each other before, during or after generating a network group.

Thus, the client device 20 receives a server channel from the server device 10 by connecting to the server device 10 through the well-known ports 18 and 24. Thereafter, the client device 20 connects to the server device 10 through the allocated server channel 17. At this time, if the client device 20 fails to establish a connection to the server device 10 by the well-known ports 18 and 24, the client device 20 retries a connection with the other party's device 30 by using the next well-known ports 18 and 24. To do so, the server device 10 further includes a timer 19 for measuring response time according to an information request from the client device. There are an appropriate number of the timers 19 corresponding to the number of the serial ports registered by the server device 10.

Thereafter, the server device 10 is constructed to allocate the server channel 17 used for multiple-connection with the client device 20 and update information of the server channel in the database (DB) 11 according to whether a connection and disconnection is made. However, in case the client device does not connect to the server channel 17 for a predetermined time or the client device connecting to the allocated server channel disconnects from the server device 10, the server device 10 can delete information indicating that the server channel is in use from the database 11.

Multiple-connection according to server channel allocation of the server device 10 and the client device 20 will be described in more detail as follows.

When the client device 20 requests for a server channel, the server device 10 opens an appropriate number of RFCOMM server channels 17 corresponding to the number of the client devices, allocates available server channels, and tries multiple-connection.

Thereafter, the server device 10 registers at least one bluetooth serial port and a server channel corresponding to the bluetooth serial port in the database 11 and performs data communications with the client device with multiple-connection. At this time, the server device 10 records flag information indicating that the registered server channel is in use at this time. In addition, in case that a connection with the client device 20 is not made until the timer 10 goes off, the server device 10 deletes the flag information indicating that the registered server channel is in use to thereby allow the server channel of the server device 10 to be allocated to another client device.

A method for generating a group network using bluetooth serial ports having such a construction in accordance with the present invention will be described as follows.

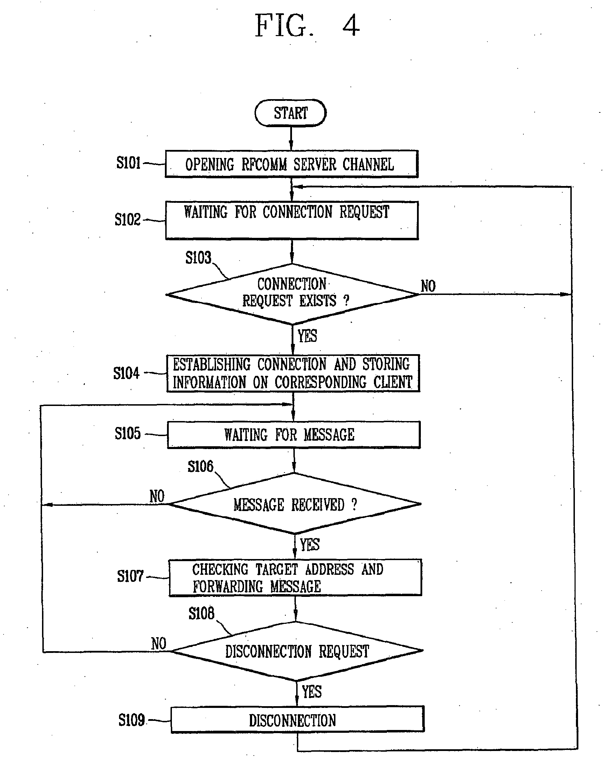

Figure 4 is a flowchart illustrating a method for generating a group network for forwarding messages between members in accordance with the embodiment of the present invention.

First, the server device 10 opens an appropriate number of RFCOMM server channels corresponding to the number of expected client devices, and waits until a connection request is received (S101 and S102).

Thereafter, if the connection request is received, the server device 10 stores information of a corresponding client such as a bluetooth address and an RFCOMM server channel in the database 11, and establishes a connection with the device 20 through the connection manager 15 (S103 and S104).

Thereafter, if the server device 10 receives a message, the server device 10 checks a target address and forwards the message to the corresponding client device 30 (S105 to S107).

For example, in case that one client device 20 forwards a message to the other client message 30, the client device 20 checks a bluetooth address of the client device 30 and forwards the message to the targeted client device 30 by forwarding the message to the server device 10. Meanwhile, if it is checked that messages received from the client devices 20 and 30 are forward to the server device 10 itself, the server device 10 forwards the messages to an application portion and a random module 16 in need of the messages.

Thereafter, if a disconnection request is received from the client devices 20 and 30, the server 10 cuts off the corresponding connection, waits until a new connection request is received to a corresponding RFCOMM server channel, and repeats the described processes (S108 and S109).

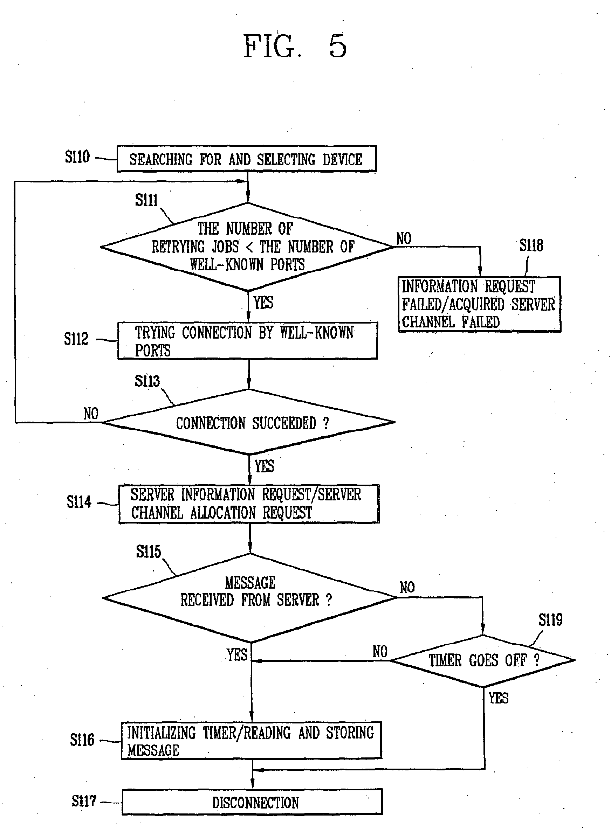

Meanwhile, a method for generating a group network capable of performing connection and management of an application by using bluetooth serial ports instead of using a complicated SDP (Service Discovery Protocol) in accordance with another embodiment will be described with reference to Figures 5 to 7.

First, the server device 10 makes preparations in such a manner that the server device 10 opens a plurality of bluetooth serial ports 17 for connection with the client device 20. At this time, the client device 20 receives a server channel from the server device 10 by requesting the server channel used when connecting to the server device 10 by using the well-known port 18. Here, the server channel allocated from the server device 10 means the serial port 17 which is opened. Also, the server device 10 means a kind of bluetooth master, which means that a maximum of seven client devices can connect to one server device 10. That is, the maximum number of serial ports which can be registered in the server device 10 is seven.

Figure 5 is a flowchart illustrating a method for acquiring application information and acquiring a server channel from the client device.

As shown in Figure 5, the method for acquiring application information and acquiring a server channel from the client device will be described as follows.

First, the client device 20 tries to establish a connection to the server device by using the well-known port 18 (S110 to S112). At this time, if the connection fails, the client device 20 retries a connection to the server device 10 by using the next well-known port 18. However, in case the connection to the server device 10 is not made even though all the well-known ports 24 are used to establish a connection to the server device 10, the client device 20 stops retrying the connection (S111 to S118).

Thereafter, if the client device 20 successfully connects to the server device 10, the service manager 22 of the client device 20 requests for various information and parameters used in a server application from the server device 10, and waits for a reply from the service manager 14 of the server device 10 (S113 to S115). At this time, the client device 20 sends an information request message and simultaneously operates the timer 23.

Thereafter, if the reply is received from the server device 10, the client device 20 initializes the timer 23, and acquires and manages information of the server application through the reply message received by the service manager 22. However, if a reply message is not received from the server device 10 until the timer 23 goes off after the client device 20 forwarded the application information request message to the server device 10 (S115 to S119), the client device 20 initializes the timer 23 and disconnects a connected bluetooth link (S117).

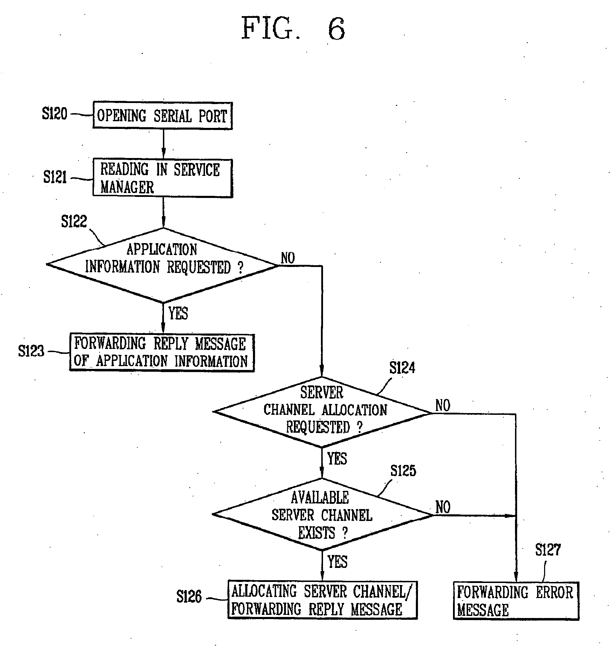

Figure 6 is a flowchart illustrating an operation of the server device when the server device receives an information request and a server channel allocation request from the client device in accordance with the embodiment of the present invention.

As shown in Figure 6, when received an application information request from the service manager 22 of the client device 20, the server device 10 checks whether the received information request message is valid. If the message is valid, the server device 10 reads its own application information and sends a reply message (S120 to S123).

Thereafter, when a server channel allocation request is received from the service manager 22 of the client device 20, the service manager 14 of the server device 10 allocates a server channel of a serial port, in which a flag indicating the serial port is in use at this time is not recorded, from the serial ports 17 which have been opened in a process that the server device 10 makes preparations for the server, and sends a reply message (S124, S125 and S126). At this time, the service manager 14 of the server device 10 records a flag that the corresponding server channel having been allocated is in use at this time in the server channel database 11 and simultaneously operates the timer 19 corresponding to the corresponding server channel. However, in case the connection with the client device 20 is not made until the timer 19 goes off, the service manager 14 deletes the flag indicating the server channel is in its use at this time, thereby making another client device receive the server channel from the server device 10.

Meanwhile, in case there is no available server channel from the opened serial ports 17 when an server channel allocation request is received from the client device 20, that is, when all the server channels are in use or there is no serial port available because of an error in the server, the service manage 14 of the server device 10 sends an error message (S124, S125 and S127).

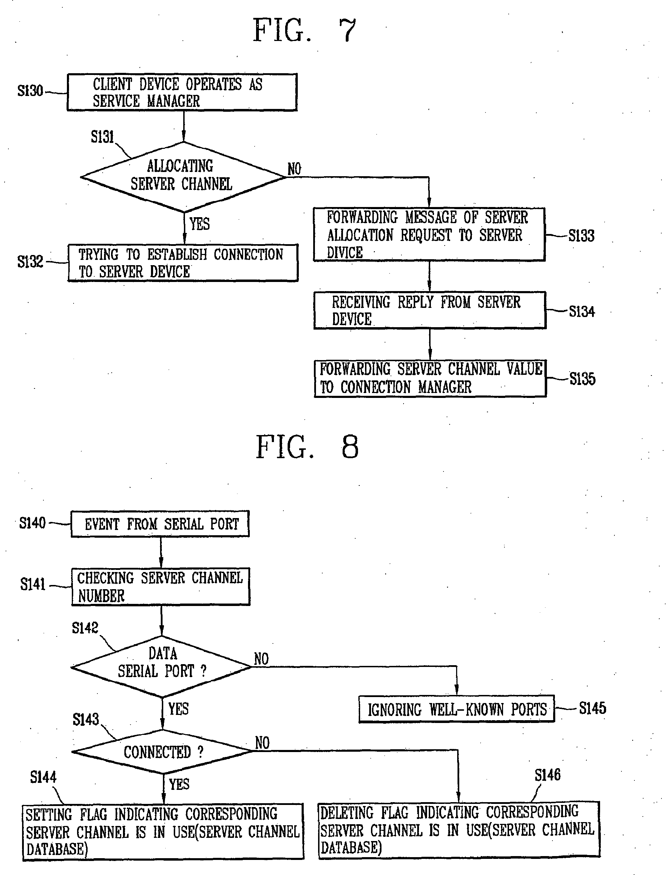

Figure 7 is an exemplary view showing an operation of the client device according to server channel allocation in the present invention.

As shown in Figure 7, when the client device 20 intends to connect to the server device 10, the service manager 22 of the client device 20 asks the connection manager 21 whether the service manager 22 of the client device 20 has received a server channel from the server device 10.

Thereafter, in case that the client device 20 has received the server channel from the server device 10 before, the service manager 22 of the client device 20 tries to establish a connection to the server device 10 by using the corresponding server channel (S131 and S132).

In case that the client device 20 has not received the server channel from the server device 10 before, the service manager 22 forwards a message of requesting server channel allocation to the service manager 14 of the server device 10 (S133).

Accordingly, if the client device 20 receives a reply to the request for server channel allocation from the server device 10, the client device 20 interprets the reply and transmits an allocated server channel value to the connection manager 21 (S134 and S135).

Figure 8 is a flowchart illustrating a method for managing a server channel in accordance with the embodiment of the present invention.

As shown in Figure 8, the server device 10 tries to establish a connection to the server channel allocated to the client device 20 before the timer 19 goes off. Thereafter, if the connection by the bluetooth serial port 17 is completed, the server device 10 initializes the timer 19. Thereafter, in order to prevent the corresponding server from being allocated to another client device, the server device 10 sets a flag indicating that the corresponding server is in use at this time by searching for the current server channel value, by which connection is completed, in the database 11 of the server device (S140 to S144).

Meanwhile, in case that the client device 20 connected to an ad-hoc network and performing communication withdraws from the network group and cuts off a bluetooth link (S145) or that a link loss is generated because the client device 20 recedes from the server 10, the bluetooth serial port becomes closed. According to this, the server device 10 searches for a server channel which has connected with and then becomes disconnected to the client device 20 in the database 19, and deletes a flag indicating that the corresponding server channel is in its use at this time (S143 and S146). Accordingly, another client device can receive the corresponding server channel.

Consequently, the present invention generates a group network such as an ad-hoc network with a plurality of bluetooth embedded devices by using bluetooth serial ports, so that desired data can be sent and received or shared within a group.

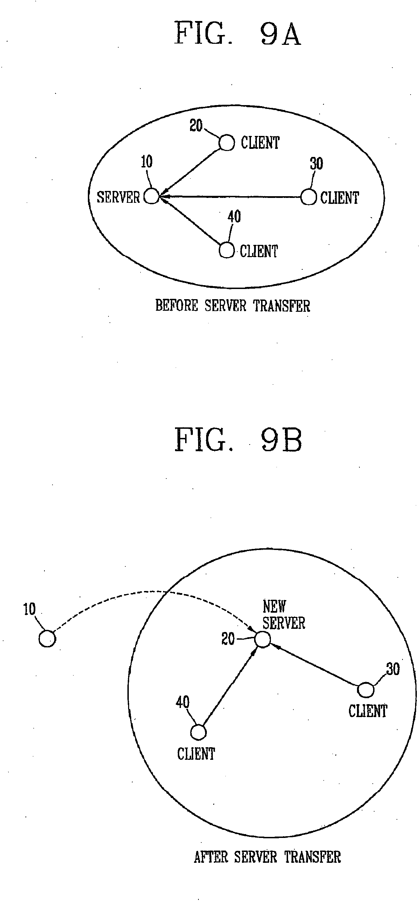

Meanwhile, a method for an automatic server transfer according to a server change in accordance with still another embodiment of the present invention will be described with reference to Figures 9 to 12.

Figure 9A and 9B are an exemplary view illustrating an automatic server transfer in a group network system in accordance with the present invention.

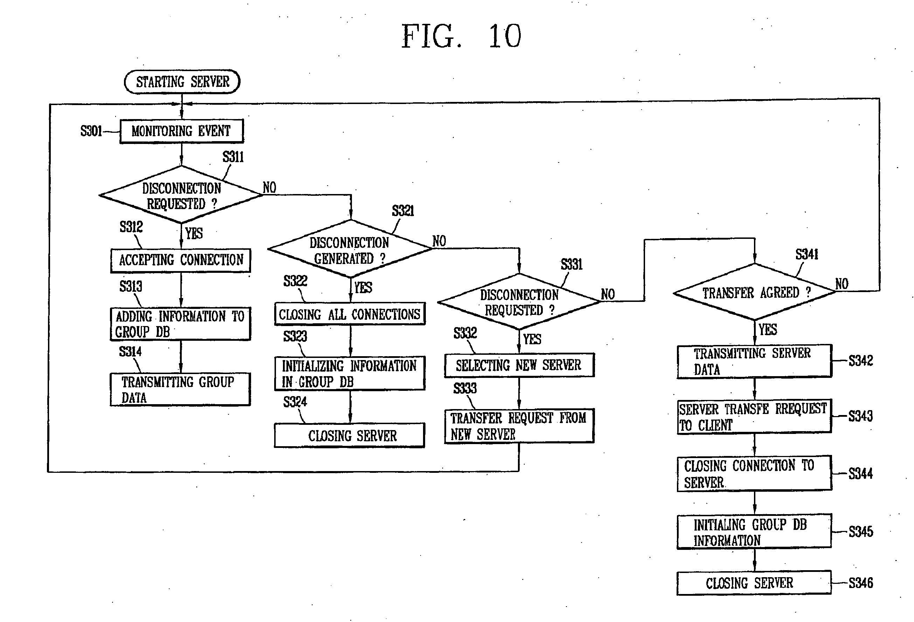

Figure 10 is a flowchart illustrating a method for server connection in accordance with the embodiment of the present invention.

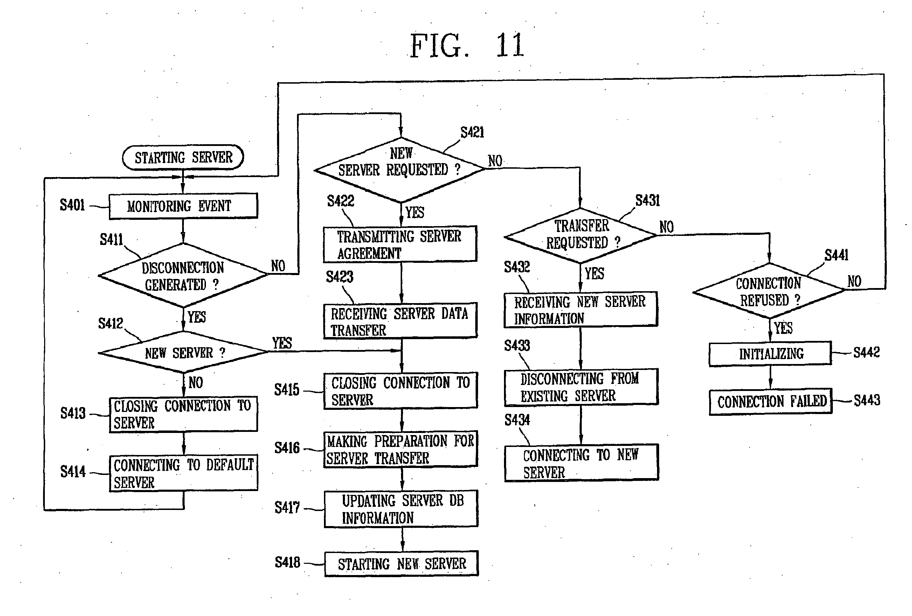

Figure 11 is a flowchart illustrating a method for client connection in accordance with the embodiment of the present invention.

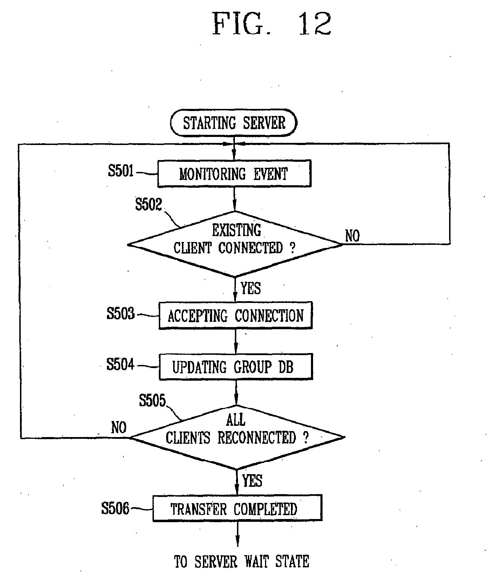

Figure 12 is a flowchart illustrating an automatic server transfer in accordance with the embodiment of the present invention.

As shown in Figure 9A and 9B, since a personal area network constructs a group network in such a manner that a plurality of client devices 20, 30 and 40 are connected to one server 10 in general, a disconnection of one server device 10 brings about separations of all the client devices 20, 30 and 40 from the group network.

For example, the server device 10 disconnects from the group network typically when the server device 10 is outside the personal area network or when the user disconnects the server device 10 from the group network. The present invention can generate more stabilized group network by transferring a server device by a method for an automatic server transfer.

First, an operation when the server device is outside the personal area network will be described as follows.

The server device 10 monitors event generation and detects the occurrence of disconnection (S301). Thereafter, the server device 10 closes the connections with all the client devices 20, 30 and 40, initializes information relevant to the network and terminates a server function (S311, S312 to S324). At this time, the client devices 20, 30 and 40 check whether each of them is a default server (S411 and S412).

Hereupon, a new server (i. e., client device) 20 closes the connection to the server device 10, is changed to a connection wait state to make possible a connection from the outside at the time of a server transfer and updates server data information (S412, S415 to S417).

Thereafter, the client device 20 is changed into a server device and waits for a connection from the outside (S418).

Hereupon, the client devices 30 and 40 close the connections with the server device 10, read default server information and tries to establish connections to the new server device 20 (S411 to S414).

In addition, the new server device 20 receives connection requests of the client devices 30 and 40 and checks whether the client devices 30 and 40 having sent the connection requests are the existing client devices. If it is checked that the existing devices 30 and 40 try connections, the new server device 20 accepts automatic connections and updates a group database (DB) (S501 to S504).

Thereafter, the new server device 20 checks whether all the client devices are connected thereto. If all the client devices are reconnected to the new server device 20, the client device 20 completes/processes a job of transferring a server and operates in a normal server state (S505 and S506).

Meanwhile, an operation when the user disconnects the server device 10 from the group network will be described as another embodiment of the present invention.

When a disconnection request is generated by the user, the server device 10 selects a new server device from the connected client devices 20, 30 and 40 and transmits a server transfer request to the new server device (S301, S331 to S333). At this time, it is assumed that the new server device is the client device 20 as shown in the exemplary view of Figure 9B.

Hereupon, the client device 20 forwards a server agreement message to the server device 10 with respect to the server transfer request, receives server data from the server device 10 and then disconnects from the existing server device 10 (S421 to S423).

Accordingly, the client device 20 disconnects from the existing server 10, makes preparations for a server transfer, updates the server data and starts an operation as a new server.

At this time, the client devices 30 and 40 receive a server transfer request from the server device 10, receive new server information, disconnect with the existing server device 10 and connect to the new server device 20 (S431 to S434).

Hereupon, the new server device 20 receives connection requests of the client devices 30 and 40 and checks whether the client devices 30 and 40 having forwarded the connection requests are the existing client devices. If it is checked that the forwarded connection requests are ones from the existing client devices, the new server device 20 accepts automatic connections and updates a group database (DB) (S511 to S514).

Thereafter, the new server device (i.e., client device) 20 checks whether all the clients 30 and 40 connected thereto. If all the client devices are reconnected to the new server device 20, the new sever device 20 completes/processes a server transferring job and operates in a normal server state (S515 and S516).

Meanwhile, a method for selecting a default server or a method for selecting a new server in the embodiments of the present invention can be variously applied according to the implementation. In addition, a step of retransmitting information on a reconnected group or a step of notifying the user of main events can be added when a server transfer is completed. A step in which client devices request reconnections from a new server is described in the embodiments of the present invention, but a method by which a new server requests a connection from each client device is also possible.

As described so far in detail, a group network system using bluetooth in accordance with the present invention allows a plurality of devices to generate one wireless network by using bluetooth RFCOMM protocols, thereby enabling reliable data communications, so that user convenience is increased and the network performance is improved.

In addition, by using bluetooth serial ports for multiple-connection, there is no need for using a complicated bluetooth SDP. In addition, since the bluetooth serial ports having different server channels are used, devices can be connected and managed independently to each other regardless of kinds of applications.

In addition, when disconnection of a server is generated, by automatically performing a server transfer, a group network can be stably maintained in a personal area network and multiple-connection can be efficiently managed, thereby offering conveniences to the users.

The present invention is applied to bluetooth embedded terminals, PDAs, notebooks and network game systems and therefore can be applied to environments of various contents applications (e.g., a network game).

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A group network system using bluetooth, comprising:
a connection manager for maintaining and managing multiple-connection between a server device and client devices and forwarding message to the corresponding device through server channel allocation;
a data manager for forwarding the message to a module or an application which has an interest in the received message or forwarding the message generated by the application to the connection manager; and
a service manager for maintaining, managing and releasing a list of applications.

2. The system of claim 1, wherein the multiple connection between the devices is made by using bluetooth serial ports (or bluetooth serial port profiles).

3. The system of claim 2, wherein the multiple-connection between devices is made in such a manner that one device is set as a server device for a server application and a plurality of devices except for the server device are set as client devices for client applications.

4. The system of claim 3, wherein the server device makes multiple-connection to the client devices by registering at least one bluetooth serial port and a sever channel corresponding to the bluetooth serial port.

5. The system of claim 1, wherein the device has a 48-bit bluetooth address.

6. The system of claim 1, further comprising:
a group manager for maintaining and managing device information on members constituting the network and performing updates when a new event occurs; and
a database (DB) for storing information on the devices.

7. The system of claim 6, further comprising:
a timer for measuring response time according to information requests from the devices.

8. The system of claim 7, wherein there are an appropriate number of the timers corresponding to the number of the serial ports registered by the server device.

9. The system of claim 1, wherein the connection manager maintains and manages connections between the devices by using bluetooth RFCOMM protocols.

10. The system of claim 9, wherein the server device opens an appropriate number of the bluetooth RFCOMM sever channels corresponding to the number of the client devices.

11. The system of claim 1, wherein the service manager performs the query and response to the corresponding client devices when the client devices want to participate in a new network or the server device intends to make client devices which do not take part in the network participate in the network.

12. The system of claim 1, wherein the server device and the client devices exchange necessary information through the well-known ports.

13. The system of claim 12, wherein in order to constitute the network system, the client devices connects to the server device by the well-known ports, receive server channels from the server device and then connect to the server device by the bluetooth serial ports.

14. The system of claim 13, wherein the client device retries to establish a connection to the other party's device by using the next well-known ports if the client device fails to establish a connection by the well-known ports.

15. The system of claim 1, wherein the server device allocates server channels used for multiple-connection to the client devices and updates server channel information according to whether a connection and disconnection is made.

16. The system of claim 15, wherein the server device allocates an available server channel when the client device requests the server channel and, records information indicating that the allocated server channel is in use.

17. The system of claim 16, wherein the server device deletes the information indicating that the server channel is in use in case that the client device does not connect with the server channel allocated for a predetermined time or that the client device connecting with the allocated server channel disconnects from the server device.

18. A method for generating a group network using bluetooth, in which one device from a plurality of devices is set as a server device for a server application and the plurality of devices except for the server device is set as client devices for client applications, comprising:
opening a bluetooth RFCOMM server channel of the server device and waiting for a connection request from the client device;
establishing a connection to the server device and storing information on the connected corresponding client device at the connection request from the client device;
waiting for a message received from the client device; and
checking a target address and forwarding the message to the corresponding client device, when the message is received.

19. The method of claim 18, wherein the server device serves as a gateway and generates a routing path with the client devices.

20. The method of claim 18, wherein information on the client device is a 48-bit bluetooth address or the RFCOMM server channel information.

21. A method for generating a group network using bluetooth, in which one device from a plurality of devices is set as a server device for a server application and the plurality of devices except for the server device is set as client devices for client applications, comprising:
a step in which at least one bluetooth serial port (or bluetooth serial profile) is opened from the server device and it is checked whether there is a request for server channel allocation from the client device;
a step in which the server channel registered in the database of the server device is allocated to the client device when the request for sever channel allocation is checked;
a step in which it is checked whether the client device connects to the allocated server channel;
a step in which the server device records information indicating that the connected corresponding server channel is in use, when the client device connects to the allocated server channel; and
a step in which the server device deletes the information indicating a disconnected corresponding server channel is in use, when the client device connecting to the server channel disconnects from the server device.

22. The method of claim 21, wherein the allocating the server channel comprises:
a step in which it is checked whether there is a server channel which can be allocated with respect to the request for server channel allocation from the client device;
a step in which the server device allocates a server channel, when a server channel which can be allocated is checked; and
a step in which an error message is generated when there is no server channel which can be allocated.

23. The method of claim 22, further comprising:
a step in which the corresponding server channel allocation is cancelled, when the client device does not connect to the server channel over a predetermined time period after the server device allocates the server channel.

24. A method for generating a group network using bluetooth, in which one device from a plurality of devices is set as a server device for a server application and the plurality of devices except for the server device is set as client devices for client applications, comprising:
a step in which it is determined whether or not there is a server disconnection request;
a step in which the server device selects a new server device from the plurality of client devices;
a step in which the server device having received the disconnection request requests a server transfer from the new server device and notifies the client devices of the new sever device; and
a step in which the client devices reconnect with the new server device.

25. The method of claim 24, wherein the selecting the new server device is performed by checking a default server device which has been previously selected from the client devices and selects the default server device as a new server.

26. The method of claim 24, wherein the reconnection step allows automatic connections only to the existing connected client devices.

27. A method for generating a group network using bluetooth, in which one device from a plurality of devices is set as a server device for a server application and the plurality of devices except for the server device is set as client devices for client applications, comprising:
a step in which the client device detects a disconnection of the server device;
a step in which a default server device is checked among the client devices if the disconnection is detected; and
a step in which all the client devices except for the client device which is checked as the default server device are reconnected to the default server device.

28. The method of claim 27, wherein the reconnection step comprises:
a step in which the client devices, not the default server device, request connections to the default server; and
a step in which only client devices which are allowed to connect to the default server device reconnect to the default server device.
